# EUROPÄISCHE PATENTSCHRIFT

(11) **EP 1 674 842 B1**
(45) Veröffentlichungstag und Bekanntmachung des Hinweises auf die Patenterteilung: **23.01.2008**
(21) Anmeldenummer: 04106971.7
(22) Anmeldetag: 23.12.2004
(51) Int. Cl.: G01G 23/01

(54) **Kalibriergewichtsanordnung für eine elektronische Waage**
Mechanical coupling for a calibration weight in an electronic balance
Couplage mécanique pour une masse d'étalonnage dans une balance électronique

(43) Veröffentlichungstag der Anmeldung: 28.06.2006
(73) Patentinhaber: Mettler-Toledo AG, 8606 Greifensee (CH)
(72) Erfinder: Genoud, Dominique, 8610 Uster (CH); Latzer, Christoph, 8330 Pfäffikon (CH)

(56) Entgegenhaltungen:
- EP-A- 0 468 159
- EP-A- 0 955 530
- DE-U1- 20 119 525

## Beschreibung

Die Erfindung betrifft eine Kalibriergewichtsanordnung für eine eine Kraftübertragungsvorrichtung aufweisende elektronische Waage und insbesondere ein Hebesystem für eine Kalibriergewichtsanordnung.

Elektronische Waagen werden häufig mittels eines internen Kalibriergewichts kalibriert. Für eine Kalibrierung wird ein Kalibriergewicht mit einer definierten Masse in Kraftkontakt mit der in einer Kraftmesszelle einer Waage angeordneten Kraftübertragungsvorrichtung gebracht und dann ein Referenzwert ermittelt. Anhand dieses Referenzwerts können weitere Wägeparameter der Waage angeglichen werden. Nach erfolgreicher Kalibrierung wird der Kontakt zwischen dem Kalibriergewicht und der Kraftübertragungsvorrichtung wieder gelöst und das Kalibriergewicht in einer Ruheposition arretiert. Das Kalibriergewicht wird dabei durch einen Transfermechanismus aus einer Ruheposition in eine Kalibrierposition und zurück bewegt. In der Kalibrierposition steht das Kalibriergewicht in Kraftkontakt mit der Kraftübertragungsvorrichtung, in der Ruheposition besteht kein Kraftkontakt. Bei vielen Waagen sind die Kalibriergewichtsanordnung und die Kraftübertragungsvorrichtung hintereinander angeordnet, wie es in der EP 0 955 530 A1 offenbart ist.

Es gibt verschiedene Transfermechanismen zur Bewegung eines Kalibriergewichts, welches in seiner Ruheposition meist auf einer mit einem Hebesystem verbundenen Auflage liegt.

In der EP 0 468 159 B1 wird eine Kalibriergewichtsanordnung mit einem Kalibriergewicht offenbart, welches über paarweise horizontal gegeneinander verschiebbare Keile vertikal bewegt und so in Kraftkontakt mit der Kraftübertragungsvorrichtung der Waage gebracht wird. Der Antrieb dieses Transfermechanismus erfolgt über eine mit den Keilen verbundene Spindel und einen motorischen Antrieb.

Ein ebenfalls vertikales Anheben bzw. Absenken erfährt ein Kalibriergewicht durch eine in der EP 0 955 530 A1 beschriebene Vorrichtung. Das Gewicht ruht auf einer Auflage, welche durch einen elektrisch angetriebenen Transfermechanismus bewegt wird.

Eine weitere elektronische Waage mit Justiergewichtsschaltung ist aus DE 201 19 525 U1 bekannt.

Wichtig ist, dass das Kalibriergewicht vor allem in der Ruheposition auch bei Stössen, Schlägen oder einem Fall der Waage arretiert ist und nicht stossartig in Kontakt mit der Kraftübertragungsvorrichtung kommt, denn dadurch könnte das Hebelwerk beschädigt werden. Die bekannten Transfermechanismen sichern das Kalibriergewicht nur gegen ein Herausfallen in Folge eines Schlages oder Falls, wie es beispielsweise während eines Transports passieren kann, indem sie das Kalibriergewicht einfach möglichst fest gegen einen Anschlag pressen. Eine plötzliche Krafteinwirkung auf das Kalibriergewichts wird direkt auf den Transfermechanismus übertragen, welcher so sogar zerstört werden kann.

Damit ergibt sich die Aufgabe eine Kalibriergewichtsanordnung mit einem Transfermechanismus zu schaffen, welcher das Kalibriergewicht bei einem auf die Waage einwirkenden Schlag, Stoss oder Fall nicht nur arretiert, sondern auch schützt, in dem er eine plötzlich einwirkende Kraft aufnimmt und ableitet.

Gelöst wird diese Aufgabe durch eine Kalibriergewichtsanordnung für eine eine Kraftübertragungsvorrichtung aufweisende elektronische Waage, wobei die Kalibriergewichtsanordnung mindestens ein mit der Kraftübertragungsvorrichtung koppelbares Kalibriergewicht, einen Transfermechanismus und einen Antrieb zur vertikalen Bewegung des Kalibriergewichts umfasst. Der Transfermechanismus weist mindestens ein Rückstellelement und ein Hebesystem mit mindestens einem Kniegelenk auf.

Das Rückstellelement und das Hebesystem sind so aufeinander abgestimmt, dass das Kniegelenk bereits bei Einwirkung einer geringen Zugkraft auf das Hebesystem einknickt, wodurch das Kalibriergewicht in Kraftkontakt mit der Kraftübertragungsvorrichtung gebracht wird. Die Kraft des Rückstellelements wiederum ist so ausgelegt, dass sie bei nachlassender Krafteinwirkung auf das Hebesystem das Kniegelenk nicht nur streckt, sondern über die gestreckte Position hinaus weiterbewegt. Das Kniegelenk wird somit sozusagen leicht überstreckt. Der Begriff überstreckt bezieht sich hier und im Folgenden ausschliesslich auf eine Beugung des Kniegelenk in der der Kalibrierposition des Kniegelenks entgegengesetzten Richtung. Das überstreckte Kniegelenk wird in der Ruheposition gegen einen Anschlag gepresst. Eine derartige Anordnung mit einem Anschlag ist vorteilhaft, da einerseits ein Kniegelenk in einem leicht gebeugten Zustand stabiler ist als im vollständig gestreckten Zustand und anderseits eine durch einen plötzlichen Schlag auf die Waage und damit auch die Kalibriergewichtsanordnung einwirkende Kraft durch das Kniegelenk und den Anschlag abgeleitet werden kann, ohne dass das Kalibriergewicht auf die Kraftübertragungsvorrichtung der Waage einwirken kann.

In Abhängigkeit der Ausgestaltung des Transfermechanismus und insbesondere des Hebesystems können unterschiedliche Arten von Rückstellelementen eingesetzt werden. Dazu gehören unter anderem verschiedene Arten von Federn oder andere Bauteile mit vergleichbarer Wirkung. Die Rückstellelemente sind in der Ruheposition der Kalibriergewichtsanordnung vorzugsweise leicht vorgespannt. Es können verschiedene Arten von Federn wie beispielsweise Schenkelfedern, Schraubendruckfedern, Zugfedern oder Blattfedern verwendet werden. Besonders vorteilhaft bei der Verwendung einer Schenkelfeder ist, dass die Rückstellkraft der Feder direkt auf das Kniegelenk einwirkt und die Feder selbst aufgrund der Befestigungsart nicht vibrieren oder anderweitig die Position verändern kann.

Das Hebesystem besteht vorzugsweise aus zwei miteinander verbundenen Kniegelenken. Die Kniegelenke wiederum können mehrere Formteile umfassen, welche direkt oder über geeignete Verbindungsmittel miteinander verbunden sind, oder auch einstückig ausgeformt sein. Bei entsprechender Ausgestaltung kann das Hebesystem auch nur ein einzelnes Kniegelenk umfassen.

Die Rückstellkraft des Rückstellelements ist auf den entsprechenden Transfermechanismus abgestimmt, um einen optimalen Ablauf des Kalibriervorgangs zu gewährleisten, also des In-Kontaktbringens und Lösens des Kontakts zwischen dem Kalibriergewicht und der Kraftübertragungsvorrichtung.

Als Antrieb für eine Kalibriergewichtsanordnung mit einem als Kniegelenk ausgestalteten Hebesystem bieten sich verschiedene Antriebe und insbesondere lineare Antriebe an, wie beispielsweise Spindel-Antriebe, Riemen-Antriebe, magnetische Antriebe oder auch Linearmotoren. Besonders klein und kompakt sind Antriebe, die zumindest teilweise aus einer Formgedächtnislegierung gestaltet sind.

Der Antrieb kann den Transfermechanismus, beispielsweise durch Umsetzung der Kraft über mindestens eine Rolle oder einen Hebel, auslösen.

Verschiedene Ausführungsformen der Kalibriergewichtsanordnung werden im Folgenden in den Figuren dargestellt. Die Figuren zeigen:
- Fig. 1: eine schematische, vereinfachte Seitenansicht einer Kraftübertragungsvorrichtung einer elektronischen Waage mit verlängerten Kalibriergewichtsträgern und einer neben der Kraftübertragungsvorrichtung angeordneten Kalibriergewichtsanordnung mit einem eine Kalibrierachse aufweisenden Kalibriergewicht in seiner Ruheposition;
- Fig. 2: eine schematische, vereinfachte Seitenansicht der Kraftübertragungsvorrichtung und der Kalibriergewichtsanordung von Figur 1 während der Kalibrierung;
- Fig. 3: eine perspektivische Darstellung einer Kalibriergewichtsanordnung mit zwei Kniegelenken, deren Gelenkachsen orthogonal zur Kalibriergewichtsachse angeordnet sind, und einem als Draht ausgestalteten Aktuator aus einer Formgedächtnislegierung;
- Fig. 4: eine vereinfachte, schematische Frontalansicht eines als Kniegelenk gestalteten Hebesystems, wobei die Gelenkachsen orthogonal zur Kalibriergewichtsachse angeordnet sind;
- Fig. 5: eine perspektivische Ansicht eines Transfermechanismus in seiner Kalibrierposition mit einer Schraubendruckfeder als Rückstellelement und einem als Kniegelenk gestalteten Hebesystem, wobei die Gelenkachsen parallel zur Kalibriergewichtsachse angeordnet sind und eine Bewegung über einen Zug direkt am Kniegelenk ausgelöst wird;
- Fig. 6: eine perspektivische Ansicht eines Transfermechanismus in seiner Kalibrierposition mit einer Schenkelfeder als Rückstellelement und einem als Kniegelenk gestalteten Hebesystem, wobei die Gelenkachsen parallel zur Kalibriergewichtsachse angeordnet sind und eine Bewegung über einen Hebel ausgelöst wird;
- Fig. 7: eine perspektivische Ansicht eines Transfermechanismus in seiner Kalibrierposition mit einer Blattfeder als Rückstellelement und einem als Kniegelenk gestalteten Hebesystem, wobei die Gelenkachsen parallel zur Kalibriergewichtsachse angeordnet sind;
- Fig. 8: eine perspektivische Ansicht eines Transfermechanismus in seiner Ruheposition mit einer Zugfeder als Rückstellelement und einem als Kniegelenk gestalteten Hebesyste, wobei die Gelenkachsen parallel zur Kalibriergewichtsachse angeordnet sind;
- Fig. 9a: eine Seitenansicht eines einstückig ausgeformten Kniegelenks im gestreckten Zustand mit einem integrierten Anschlag;
- Fig. 9b: eine Seitenansicht eines einstückig ausgeformten Kniegelenks in der Kalibrierposition mit einem integrierten Anschlag.

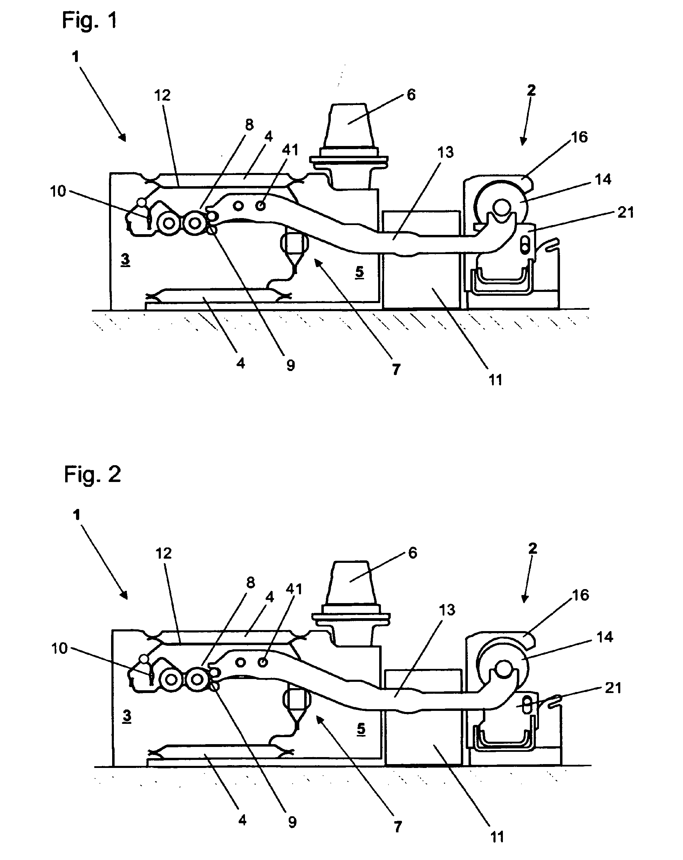

Zur Veranschaulichung der bekannten Anordnung von Kraftübertragungsvorrichtung 1 und Kalibriergewichtsanordnung 2 und in einer Kraftmesszelle einer elektronischen Waage sind diese in den Figuren 1 und 2 in Seitenansicht dargestellt. Figur 1 zeigt eine erfindungsgemässe Kalibriergewichtsanordnung 1 in ihrer Ruheposition und Figur 2 eine erfindungsgemässe Kalibriergewichtsanordnung 1 in ihrer Kalibrierposition. Die Kraftübertragungsvorrichtung 1 weist eine Parallelführung mit einem feststehenden Parallelogrammschenkel 3 und einem über zwei Parallelogrammlenker 4 an diesen angelenkten, beweglichen Parallelogrammschenkel 5 auf. Letzterer ist über den Konus 6 mit einer hier nicht gezeigten Waagschale verbunden und durch Belastung derselben gegenüber dem feststehenden Parallelogrammschenkel 3 vertikal in Richtung der Schwerkraft auslenkbar. Die Kraftübertragungsvorrichtung 1 weist ein erstes Koppelelement 7 auf, das eine in den beweglichen Parallelogrammschenkel 5 eingeleitete Kraft auf ein Hebelwerk überträgt. In der gezeigten Kraftübertragungsvorrichtung 1 besitzt das Hebelwerk einen ersten der Kraftuntersetzung dienende Hebel 8, der über ein zweites Koppelelement 10 mit einem zweiten Hebel 9 verbunden ist. Das erste bzw. zweite Koppelelement 7, 10 greift über Dünnstellenbiegelager am ersten bzw. zweiten Hebel 8, 9 an. Eine Auslenkung des beweglichen Parallelogrammschenkels 5 in Richtung der Schwerkraft bewirkt eine Kraftübertragung auf das Hebelwerk, welches die Kraft untersetzt und an ein hier nicht detailliert dargestelltes, meist elektromagnetisches Kraftkompensationssystem 11 weiterleitet.

Die Parallelführung 3, 4, 5, das erste und zweite Koppelelement 7, 10 und der erste und zweite Hebel 8, 9 sind in dem im wesentlichen quaderförmigen Materialblock derart ausgebildet, dass dessen Materialbereiche durch materialfreie Bereiche in Form von dünnen, den Materialblock senkrecht zu seiner ausgedehnten Fläche durchsetzende Schnittlinien 12 voneinander getrennt sind. Die Schnittlinien 12 werden bevorzugt mittels Funkenerosion erzeugt.

Der Hebel 8 ist mit Durchgangsbohrungen versehen, an denen mittels geeigneter Befestigungsmittel 41 zwei Kalibriergewichtsträger 13 (es ist nur einer zu sehen) als Verlängerung des kürzeren, eingangsseitigen Hebelarms des ersten Hebels 8 angebracht sind.

Wie in Figur 1 zu erkennen ist, ruht das Kalibriergewicht 14 während eines Wiegevorgangs auf einer Kalibriergewichtsauflage 21 und wird gegen die als Parkbügel 16 ausgestalteten Seitenteile der Kalibriergewichtsanordnung 2 gepresst. Aus dieser Darstellung ist das vordere Seitenteil der Kalibriergewichtsanordnung 2 entfernt worden, so dass die Kalibriergewichtsauflage 21 und vor allem die Kontaktstelle zwischen dem Kalibriergewicht 14 und den Kalibriergewichtsträgern 13 zu sehen ist. Dasselbe gilt auch für Figur 2. Das Kalibriergewicht 14 ist in Figur 1 vollständig vom Hebelwerk der Kraftübertragungsvorrichtung 1 entkoppelt.

Für eine Kalibrierung wird das Kalibriergewicht 14 mittels eines Transfermechanismus, welcher hier durch die Kalibriergewichtsauflage 21 verdeckt wird, auf die Träger 13 abgesenkt und so in Kraftkontakt mit dem Hebelwerk gebracht, siehe Figur 2. Das Kalibriergewicht 14 ruht vollständig auf den Kalibriergewichtsträgern 13. Der Transfermechanismus wird in dieser Ansicht durch die Kalibriergewichtsauflage 21 verdeckt. Der Transfermechanismus weist ein Hebesystem und einen Antrieb auf. Der Antrieb wird im Allgemeinen neben der Kalibriergewichtsanordnung angeordnet, bezogen auf die Darstellung vor oder hinter der Zeichnungsebene.

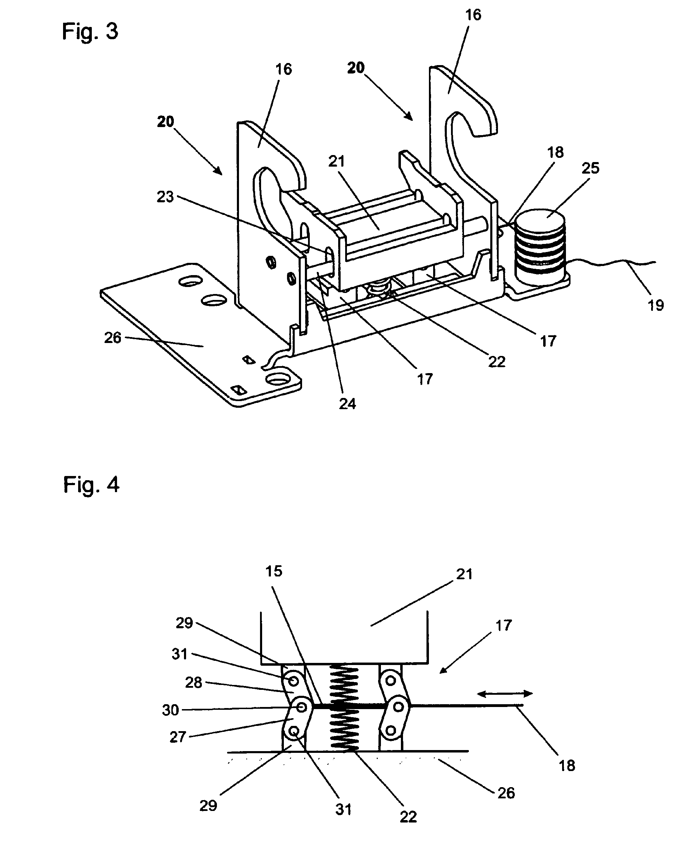

Eine detaillierte Darstellung der Kalibriergewichtsanordnung zeigt Figur 3. Die perspektivische Ansicht zeigt eine Kalibriergewichtsanordnung ohne Kalibriergewicht mit einem in diesem Ausführungsbeispiel zwei Kniegelenke 17 umfassenden Hebesystem und einem beheizbaren als Draht ausgestalteten Aktuator 18 aus einer Formgedächtnislegierung (eng. shape memory alloys, SMA) als Teil des Antriebs.

Formgedächtnislegierungen zeichnen sich dadurch aus, dass sie beim Überschreiten einer Phasenübergangstemperatur ihre physikalischen Eigenschaften aufgrund eines Festphasenübergangs ändern. Formgedächtnislegierungen sind bei Temperaturen unterhalb ihrer Phasenübergangstemperatur formbarer als bei Temperaturen oberhalb der Phasenübergangstemperatur. Eine Temperaturerhöhung über die Phasenübergangstemperatur hinaus bewirkt im Falle der Ausgestaltung als Draht, dass sich dieser verkürzt und somit eine Kraft ausüben kann, welche beispielsweise als Zugkraft auf die hier dargestellten Kniegelenke 17 einwirkt und so deren Bewegung auslöst. Die Temperaturerhöhung kann in einfacher Weise durch ein Beaufschlagen des Drahts 18 mit Strom erfolgen, hier durch den elektrischen Anschluss 19 an einem Ende des Drahts angedeutet. Geerdet wird der Draht 18 am entgegen gesetzten Ende, welches hier nicht zu sehen ist. Eine Formgedächtnislegierung verkürzt sich um einen gewissen Prozentsatz, z. B. verkürzt sich eine Nickel-Titan-Legierung mit einer Phasenübergangstemperatur von etwa 90°C und einem Ni-Anteil von ca. 50 % um etwa 4 %. Der Draht 18 ist allerdings flexibel und wird beispielsweise in der hier dargestellten Art über eine Rolle 25 aus einem elektrisch und thermisch nicht leitenden, gleitenden technischen Kunststoff, beispielsweise Teflon, mehrfach umgelenkt. Der Draht kann auch über mehrere Umlenkmittel wie Hebel und/oder Rollen umgelenkt werden.

Die Seitenteile 20 der Kalibriergewichtsanordnung weisen an ihren oberen Enden kreisförmige Aussparungen auf, hier als Parkbügel 16 bezeichnet, gegen die das auf der Kalibriergewichtsauflage 21 ruhende Kalibriergewicht (hier nicht dargestellt) in seiner Ruheposition gedrückt wird. Unterhalb der Kalibriergewichtsauflage 21 befindet sich der Transfermechanismus bestehend aus einem Hebesystem aus zwei baugleichen Kniegelenken 17 und einer Schraubendruckfeder 22 als Rückstellelement (s. auch Figur 4). Die Kniegelenke 17 sind miteinander verbunden und wirken derart zusammen, dass beide zusammen durch einen Antrieb, hier einem einen SMA-Draht 18 aufweisenden linearen Antrieb, leicht bewegt werden können. Bezogen auf die Zeichnung wird auf die beiden Kniegelenke 17 durch den sich verkürzenden SMA-Draht 18 eine nach rechts gerichtete Zugkraft ausgeübt, die bewirkt, dass die Kniegelenke 17 sich zusammenfalten und damit eine vertikale Abwärtsbewegung der Kalibriergewichtsauflage 21 einleiten. Dabei wird das Rückstellelement 22 gespannt. Der Draht 18 wird durch ein hier verdecktes Loch durch das Seitenteil 20 der Kalibriergewichtsanordnung geführt.

Die vertikale Bewegung der Kalibriergewichtsauflage 21 wird in diesem Ausführungsbeispiel über zwei durch die komplette Kalibriergewichtsauflage 21 reichende Führungsstangen 24, welche an den beiden Seitenteilen 20 befestigt sind, geführt, in dem die Führungsstangen jeweils durch ein Langloch 23 in der Kalibriergewichtsauflage 21 ragen und so ein Verkippen der Kalibriergewichtsauflage 21 verhindern. Gleichzeitig begrenzt die Höhe des Langlochs 23 die vertikale Auslenkung der Kalibriergewichtsauflage 21.

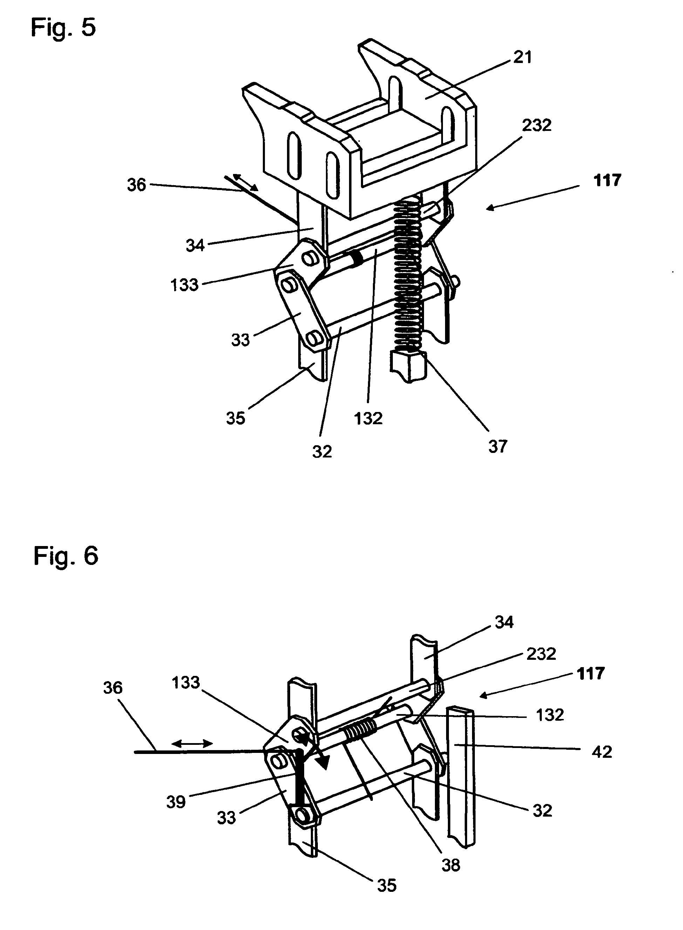

Figur 4 zeigt eine schematische Darstellung des Transfermechanismus aus Figur 3 in einer Position zwischen der Kalibrierposition und der Ruheposition. Unterhalb der nur angedeuteten Kalibriergewichtsauflage 21 sind zwei Kniegelenke 17 und eine Schraubendruckfeder 22 als Rückstellelement angeordnet. Die Gelenkachsen der Kniegelenke 17 sind orthogonal zur Kalibriergewichtsachse (s. Figur 1,2) angeordnet und die Kniegelenke 17 sind über ein starres Verbindungselement 15 miteinander verbunden. Jedes Kniegelenk besteht im Wesentlichen aus zwei Formteilen 27, 28, welche über Verbindungsteile 29 auf der Grundplatte 26 beziehungsweise an der Kalibriergewichtsauflage 21 befestigt sind. Die Formteile 27, 28 sind miteinander über ein Verbindungsmittel 30 und mit den Verbindungsteilen 29 zur Grundplatte 22 bzw. zur Kalibriergewichtsauflage 21 mit Verbindungsmitteln 31 verbunden. Je nach Ausgestaltung der Formteile 27, 28 kann es sich bei den Verbindungsmitteln 30, 31 beispielsweise um Stangen mit Sicherungselementen oder um Nieten handeln. Die Formteile 27, 28 können entweder einstückig sein und unterhalb der kompletten Kalibriergewichtsauflage 21 verlaufen, oder scheibenförmig gestaltet und durch Stangen oder ähnliches verbunden sein (s. auch Figur 5).

Der einen SMA-Draht 18 aufweisende lineare Antrieb ist an einem der beiden miteinander verbundenen Kniegelenke 17 befestigt. Bewirkt der Antrieb eine Zugkraft auf die Kniegelenke 17, so knicken diese ein und leiten eine vertikale Abwärtsbewegung der Kalibriergewichtsauflage 21 ein. Gleichzeitig wird die Schraubendruckfeder 22 durch die Gewichtskraft der Kalibriergewichtsauflage 21 und anfänglich auch die Gewichtskraft des darauf ruhenden Kalibriergewichts (hier nicht dargestellt) zusammengedrückt oder gespannt. Das Kalibriergewicht wird im Laufe der Abwärtsbewegung der Kalibriergewichtsauflage 21 auf die Kalibriergewichtsträger (s. Figur 1) abgesenkt und befindet sich dann nicht mehr in Kontakt mit der Kalibriergewichtsauflage 21.

Lässt die Zugkraft des Antriebs nach, so kann sich das Rückstellelement 22 wieder entspannen und bewirkt einerseits, dass sich die Kniegelenke 17 wieder aufrichten und andererseits, dass die Kalibriergewichtsauflage 21 wieder in ihre Ruheposition bewegt wird. Auf dem Weg nach oben greift die Kalibriergewichtsauflage 21 unter das Kalibriergewicht und trennt so dessen Kraftschluss mit der Kraftübertragungsvorrichtung der Waage. Weist der Antrieb einen SMA-Draht 18 auf, so bewirkt das Rückstellelement 22 auch, dass der nach der Kalibrierung erkaltende Draht wieder zu seiner ursprünglichen Länge gedehnt wird, wozu eine Kraft nötig ist.

Eine weitere Ausführungsform des Transfermechanismus ist in Figur 5 gezeigt. Das Hebesystem umfasst zwei Kniegelenke 117, welche aus mit geeigneten Verbindungsmittel 132, wie Stangen, verbundenen scheibenförmigen Formteilen 33, 133 gebildet werden. Die Gelenkachsen der Kniegelenke 117 sind hier parallel zur Kalibriergewichtsachse (s. Figur 1, 2) angeordnet. Die Formteile 33, 133 sind über weitere gleichartige Verbindungsmittel 32, 232 mit den Verbindungstücken 34, 35 verbunden. Das Verbindungsstück 34 ist wiederum an der Kalibriergewichtsauflage 21 befestigt.

Das Verbindungsstück 35 dient u. a. zur Befestigung des Hebesystems an der Kalibriergewichtsanordnung, beispielsweise an einer Grundplatte oder den Seitenteilen (s. Figur 2). Es ist auch möglich, eine der Verbindungsstangen 32, 232 zur Befestigung an der Kalibriergewichtsanordnung, beispielsweise an den Seitenteilen der Kalibriergewichtsanordnung zu verwenden.

Die Funktionsweise der Kniegelenke 117 entspricht der bereits beschriebenen. Allerdings greift der hier nur angedeutete Antrieb 36 direkt am mittleren Verbindungsmittel 132 an und bewirkt so ein Zusammenklappen der Kniegelenke 117, wie es in der Zeichnung zu erkennen ist. Als Rückstellelement 37 ist eine Schraubdruckfeder zwischen einer Grundplatte und der Kalibriergewichtsauflage 21 befestigt. In der hier gezeigten Kalibrierposition ist die Feder 37 angespannt und der Antrieb 36 bewirkt eine Zugkraft auf die Kniegelenke 117. Lässt die über den Antrieb 36 wirkende Zugkraft nach, so kann sich die Feder 37 wieder nahezu entspannen und bewirkt, dass sich die Kniegelenke 117 wieder aufrichten, wie auch dass sich die Kalibriergewichtsauflage 21 in ihre Ruheposition bewegt. Das Zusammenklappen der in diesem Ausführungsbeispiel gezeigten Kniegelenke 117 wird bereits durch Überwindung eines geringen Zugwegs von wenigen Millimetern ausgelöst.

Schraubendruckfedern sind nur eine der möglichen Ausgestaltungsformen des Rückstellelements. Figur 6 zeigt einen Transfermechanismus mit dem gleichen Hebesystem und in der gleichen Ausrichtung wie Figur 5 allerdings mit einem als Schenkelfeder 38 ausgestalteten Rückstellelement und einem Hebel 39, welcher den Angriffspunkt für die Zugkraft des Antriebs 36 darstellt. Die Funktionsweise des Hebesystems, also des Kniegelenks, entspricht der des Hebesystems in Figur 5. Zur besseren Übersicht wurde die Kalibriergewichtsauflage in Figur 6 nicht dargestellt. Zusätzlich weist dieses Ausführungsbeispiel einen hier beispielhaft als Pfosten dargestellten Anschlag 42 auf. Dieser ist so angeordnet ist, dass mindestens ein Kniegelenk 117 in seiner Ruheposition dagegen gepresst wird, wodurch der Transfermechanismus in seiner Ruheposition arretiert wird.

Die Ausgestaltung des Rückstellelements 38 als Schenkelfeder ist sehr vorteilhaft. Die Schenkelfeder 38 ist um die mittlere Verbindungstange 132 gewickelt und ihre beiden Schenkel liegen jeweils auf der unteren bzw. oberen Verbindungsstange 32, 232, so dass die Schenkelfeder 38 beim Zusammenklappen der Kniegelenke 117 weiter gespannt wird und beim Nachlassen der auf die Kniegelenke 117 einwirkenden Zugkraft diese wieder aufrichten, bei entsprechender Vorspannung der Schenkelfeder 38 überstrecken und gegen den Anschlag 42 pressen. Vorteilhaft ist, dass die Kraft der Schenkelfeder 38 gerichtet auf die Kniegelenke 117 einwirkt und durch die Befestigung der Feder 38 an der mittleren Verbindungsstange 132 geführt wird.

In diesem Ausführungsbeispiel weisen die Kniegelenke einen fest an einem der unteren Formteile 33 befestigten Hebel 39 auf, an den der hier nur angedeutete Antrieb 36 angreift. Lässt die Zugkraft nach, dann bewegen sich die Kniegelenke und damit auch der Hebel 39 wie durch den Doppelpfeil angedeutet, bezogen auf die Zeichnung nach rechts und die hier nicht dargstellte Kalibriergewichtsauflage wird nach oben bewegt. Der Hebel 39 kann an verschiedenen Stellen am Kniegelenk angreifen bzw. angebracht sein, beispielsweise an einem der unteren Formteile 33 oder an einer der Achsen 132, 133.

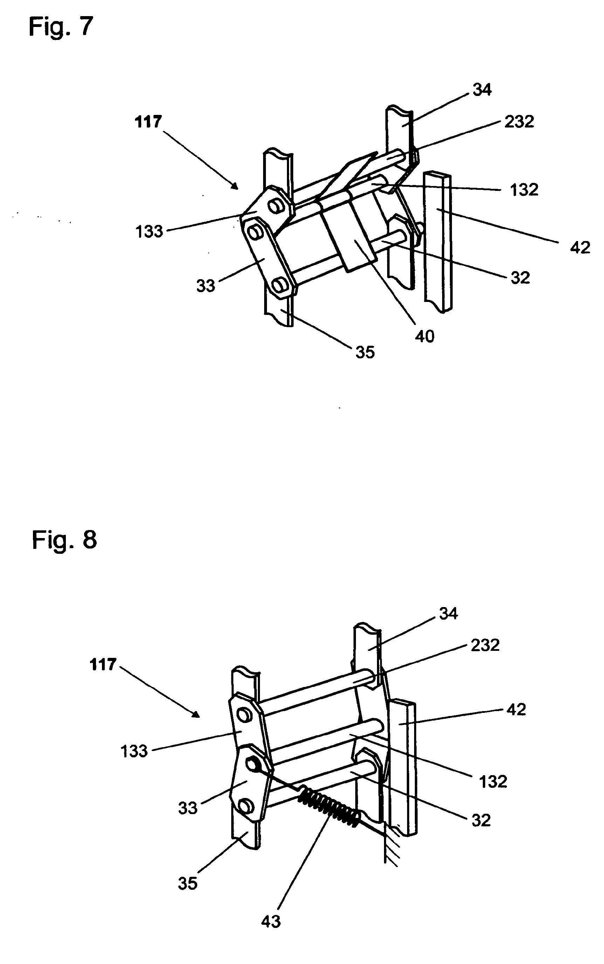

Figur 7 zeigt einen Transfermechanismus mit zwei Kniegelenken 117 und einer Blattfeder 40 als Rückstellelement. Für eine Beschreibung des Aufbaus und der Funktionsweise eines derartigen Transfermechanismus wird auf die Beschreibung der Figuren 5 und 6 verwiesen. Der einen Zug bewirkende Antrieb kann wie in den Figuren 5 oder 6 dargestellt befestigt sein. Bei diesem Ausführungsbeispiel ist eine Blattfeder 40 über eine Hülse an der mittleren Verbindungsstange 132 befestigt, so dass die Blattfeder 40 während einer Kalibrierung durch die obere und untere Verbindungsstange 32 zusammengedrückt wird. Lässt der Zug des Abtriebs (s. Figur 5,6) auf die Kniegelenke 117 nach, so drückt die Blattfeder 40 gegen die untere und obere Verbindungsstange 32, 232 und richtet die Kniegelenke 117 wieder auf und überstreckt sie.

Ein weiteres Ausführungsbeispiel des Transfermechanismus, welcher sich hier in seiner Ruheposition befindet, ist in Figur 8 gezeigt. Für eine Beschreibung des Aufbaus und der Funktionsweise eines derartigen Transfermechanismus wird auf die Beschreibung der Figuren 5 bis 7 verwiesen. Das immer noch leicht vorgespannte Rückstellelement, welches hier als Zugfeder 43 ausgestaltet ist, bewirkt eine Kraft auf die Kniegelenke 117, welche die in der Ruheposition mindestens eines der überstreckten Kniegelenke 117 gegen mindestens einen Anschlag 42 pressen und so arretieren. Die Zugfeder 43 ist in diesem Ausführungsbeispiel fest zwischen einem der Formteile 33, 133 und einer hier nicht näher dargestellten Halterung, beispielsweise einer Gehäusewand, befestigt. Wirkt durch einen Antrieb (s. Figur 5 oder 6) eine der Kraft der Zugfeder 43 entgegengesetzte Kraft auf den Transfermechanismus, so wird die Zugfeder weiter gespannt und die Kniegelenke 117 werden zunächst gestreckt und dann zum Zusammenklappen gebracht (s. Figuren 5 bis 7), wodurch die hier nicht dargestellten Kalibriergewichtsauflage abgesenkt wird und das Kalibriergewicht in Kraftkontakt mit der Kraftübertragungsvorrichtung gebracht wird.

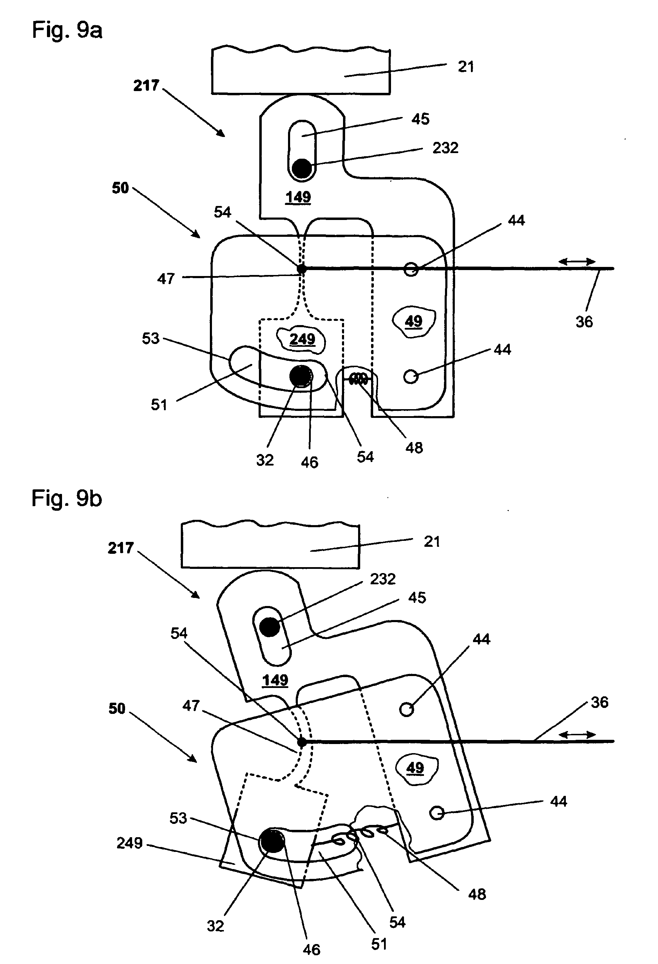

Neben den bisher vorgestellten Kniegelenken besteht auch die Möglichkeit, ein einstückig ausgeformtes Kniegelenk, beispielsweise mit einem Transfermechanismus, ähnlich dem in den Figuren 5 bis 8 gezeigten, zu kombinieren. Ein derartiges Kniegelenk 217 ist in den Figuren 9a und 9b dargestellt. Figur 9a zeigt das einstückige Kniegelenk in einem gestrecken Zustand, d. h. das Kniegelenk ist senkrecht ausgerichtet und befindet sich in einer Position nahe der Ruheposition, ohne dass das Kniegelenk an einen Anschlag gedrückt wird. Figur 9b zeigt das einstückige Kniegelenk in seiner Kalibrierposition. Die Zeichnungen sind so ausgerichtet, dass sich die Kalibriergewichtsauflage 21 oberhalb der Zeichnung befindet. Die Handlinien in den Zeichnungen deuten an, dass sich diese Elemente in einer hinteren Zeichnungsebene befinden und normalerweise verdeckt wären.

Das Kniegelenk 217 ist einstückig, vorzugsweise aus einem technischen Kunststoff gefertigt. Es besteht aus drei miteinander verbundenen Funktionsbereichen. Der erste Bereich 49 weist zwei Aussparungen 44 zur Befestigung des Anschlags 50 am Kniegelenk 217 auf. Der Anschlag 50 und das Kniegelenk 217 sind fest miteinander verbunden und können auch als ein einziges Bauteil realisiert werden. Der zweite Bereich 149 ist mit dem ersten Bereich 49 fest verbunden und weist ein Langloch 45 auf. Der dritte Bereich 249 weist eine weitere Aussparung 46 auf und ist mit dem zweiten Bereich 149 über ein Biegelager 47 und mit dem ersten Bereich 49 über eine Zugfeder 48 als Rückstellelement verbunden.

Das einstückige Kniegelenk 217 kann die Kniegelenke 117 in den Figuren 5 bis 8 ersetzen. Weiterhin ermöglicht der Einsatz des einstückigen Kniegelenks 217 die Verwendung von nur zwei Verbindungstangen 32, 232. Die Funktion der mittleren Verbindungsstange 132 (s. Figuren 5 bis 8) wird von dem Biegelager 47 übernommen.

Für einen Transfermechanismus werden zwei Kniegelenke 217 mit zwei Verbindungsstangen 32, 232 verbunden. Die untere Verbindungsstange 32 wird über die Aussparung 46 fest mit dem Bereich 249 verbunden und die obere Verbindungstange 232 durch das Langloch 45 im Bereich 149 geführt. Die beiden Verbindungsstangen 32, 232 sind in diesem Ausführungsbeispiel gehäusefest befestigt. Die Kalibriergewichtsauflage 21 ist mit dem Kniegelenk 217 verbunden, wobei das Langloch 45 die maximale vertikale Verschiebung des Kniegelenks 217 und damit auch die der Kalibriergewichtsauflage vorgibt.

Das Anschlagelement 50 weist ein mit der Aussparung 46 korrespondierendes Langloch 51 auf, welches die Bewegung der unteren Verbindungsstange 32 führt und begrenzt. Die beiden Enden des Langlochs 51 weisen einen ersten und zweiten Anschlag 52, 53 auf. Der erste Anschlag 52 ist der Anschlag für die Verbindungsstange 32, wenn sich der Transfermechanismus in seiner Ruheposition befindet, das Kniegelenk über die gestreckte Position hinaus ausgelenkt also überstreckt ist. Der Anschlag 53 ist der Anschlag für die Verbindungsstange 32 in der Kalibrierposition des Transfermechanismus, bei sich der das Kalibriergewicht in Kraftkontakt mit der Kraftübertragungsvorrichtung befindet und das Kniegelenk 217 eingeknickt ist.

Für eine Kalibrierung (s. Figur 9b) bewirkt der hier nur angedeuteten Antrieb 36, welcher über ein Befestigungsteil 54, beispielsweise eine Aussparung oder einen Haken, am Anschlagelement 50 befestigt ist, einen bezogen auf die Zeichnung nach rechts gerichteten Zug auf das Anschlagselement 50. Dadurch werden das Anschlagelement 50 und der Bereich 49 des Kniegelenks 217 nach rechts gezogen. Da der Bereich 249 des Kniegelenks 217 fest mit der unteren Verbindungsstange 32 verbunden ist, bewirkt der Antrieb 36, dass sich das Rückstellelement 48 spannt und sich das Biegelager 47 verbiegt. Dies bewirkt, dass der Bereich 249 auslenkt, in dem er sich leicht um die Verbindungsstange 32 dreht. Weiterhin wird der zweite Bereich 149 des Kniegelenks 217, welcher mit der Kalibriergewichtsauflage verbunden ist, nach unten gezogen und gleichzeitig nach links gedreht. Das Kniegelenk 217 knickt ein, die Kalibriergewichtsauflage 21 wird nach unten bewegt und das Kalibriergewicht in Kraftkontakt mit der Kraftübertragungsvorrichtung gebracht.

Die Figuren 5 bis 8 zeigen Kniegelenke, welche durch scheibenförmige mit Stangen verbundene Formteile gebildet werden. Es ist auch denkbar, dass ein derartiges Kniegelenk aus einstückigen Formteilen 33, 133 besteht, welche die gesamte Breite der Kalibriergewichtsauflage einnehmen. Ebenso ist es möglich, die beiden Formteile 33, 133 durch eines der in Figur 9 vorgestellten einstückig ausgeformten Bauteile 217 mit integriertem Anschlag 50 zu ersetzen.

Neben dem erwähnten, eine Formgedächtnislegierung umfassenden Antrieb, kann prinzipiell jeder handelsübliche Antrieb und vorzugsweise jeder lineare Antrieb verwendet werden, wenn dieser die Anforderungen für den Antrieb einer Kalibriergewichtsanordnung einer elektronischen Waage erfüllt. Bekannte lineare Antriebe umfassen u. a. Spindel-Antriebe, Riemen-Antriebe, magnetische Antriebe oder Linearmotoren.

Als Rückstellelemente wurden in den Ausführungsbeispielen vor allem Federn wie Schraubendruckfedern, Schenkelfedern und Blattfedern beschrieben. Neben diesen explizit erwähnten Federtypen, können selbstverständlich auch andere Arten von Federn oder Bauteile mit vergleichbarer Wirkung eingesetzt werden. Je nach aufzubringender Rückstellkraft können ein oder mehrere Rückstellelemente eingesetzt werden.

Die erwähnte Kraftübertragungsvorrichtung stellt nur eine der bekannten Arten von Kraftübertragungsvorrichtungen dar. Die erfindungsgemässe Kalibriergewichtsanordnung kann auch mit anderen Kraftübertragungsvorrichtungen eingesetzt werden.

In den Figuren 5 und 6 sind beispielhaft zwei unterschiedliche Angriffspunkte für den Antrieb gezeigt, wobei auch andere Angriffspunkte realisiert werden können.

Der in den Figuren 5 bis 8 dargestellte Anschlag 42 ist nur beispielhaft als eine Art Pfosten ausgeformt, es sind auch jegliche andere Ausführungen mit derselben Wirkung oder Funktion möglich.

### Bezugszeichenliste

- 1: Kraftübertragungsvorrichtung
- 2: Kalibriergewichtsanordnung
- 3: feststehender Parallelogrammschenkel
- 4: Parallelogrammlenker
- 5: beweglicher Parallelogrammschenkel
- 6: Konus
- 7: erste Koppel
- 8: erster Hebel
- 9: zweiter Hebel
- 10: zweite Koppel
- 11: Kraftkompensationssystem
- 12: Schnittlinie
- 13: Kalibriergewichtsträger
- 14: Kalibriergewicht
- 15: starres Verbindungselement
- 16: Parkbügel
- 17,117,217: Kniegelenk
- 18: SMA-Draht
- 19: elektrische Zuleitung
- 20: Seitenteil
- 21: Kalibriergewichtsauflage
- 22: Schraubendruckfeder
- 23: Langloch
- 24: Führungsstange
- 25: Umlenkrolle
- 26: Grundplatte
- 27: Formteil
- 28: Formteil
- 29: Verbindungsteil
- 30: Verbindungsmittel
- 31: Verbindungsmittel
- 32: untere Verbindungstange

- 132: mittlere Verbindungsstange
- 232: obere Verbindungsstange
- 33, 133: Formteil
- 34: Verbindungsstück
- 35: Verbindungsstück
- 36: Antrieb
- 37: Schraubendruckfeder
- 38: Schenkelfeder
- 39: Hebel
- 40: Blattfeder
- 41: Befestigungsmittel
- 42: Anschlag
- 43: Zugfeder
- 44: Aussparung
- 45: Langloch
- 46: Aussparung
- 47: Biegelager
- 48: Zugfeder
- 49, 149, 249: Funktionsbereiche des einstückigen Kniegelenks
- 50: Anschlagelement
- 51: Langloch
- 52: erster Anschlag
- 53: zweiter Anschlag
- 54: Befestigungsteil

## Patentansprüche

1. Kalibriergewichtsanordnung für eine eine Kraftübertragungsvorrichtung (1) aufweisende elektronische Waage, wobei die Kalibriergewichtsanordnung (2) mindestens ein mit der Kraftübertragungsvorrichtung (1) koppelbares Kalibriergewicht (14), einen Transfermechanismus und einen Antrieb zur vertikalen Bewegung des Kalibriergewichts umfasst, **dadurch gekennzeichnet, dass** der Transfermechanismus mindestens ein Rückstellelement (22, 37, 38.40, 43,48) und ein mindestens ein Kniegelenk (17,117.217) umfassendes Hebesystem ausweist.

2. Kalibriergewichtsanordnung nach Anspruch 1 **dadurch gekennzeichnet, dass** die Rückstellkraft des Rückstellelements (22, 37, 38, 40, 43,48) ausreicht, um der Gewichtskraft des Kalibriergewichts (14) und der Kalibriergewichtsauflage (21) entgegen zu wirken und das Kniegelenk (17, 117, 217) von einer Kalibrierposition in eine Ruheposition zurück zu bewegen.

3. Kalibriergewichtsanordnung nach Anspruch 1 oder 2 **dadurch gekennzeichnet, dass** die Kallbriergevvichtsanordnung einen Anschlag (42, 53) für das Kniegelenk (17,117, 217) in seiner Ruheposition aufweist.

4. Kalibriergewichtsanordnung nach einem der Ansprüche 1 bis 3 **dadurch gekennzeichnet, dass** das Rückstellelement eine Schenkelfeder (38), eine Blattfeder (40) oder eine Zugfeder (43,48) ist.

5. Kalibriergewichtsanordnung nach einem der Ansprüche 1 bis 2 **dadurch gekennzeichnet, dass** das Rückstellelement eine Schraubendruckfeder (22, 37) ist.

6. Kallbriergewichtsanordnung nach einem der Ansprüche 1 bis 5 **dadurch gekennzeichnet, dass** das mindestens eine Kniegelenk (17, 117) mindestens zwei Formteile (27, 28; 33, 133) umfasst, welche direkt oder über geeignete Verbindungsmittel (30, 31; 32, 132, 232) miteinander verbunden sind.

7. Kalibriergewichtsanordnung nach einem der Ansprüche 1 bis 5 **dadurch gekennzeichnet, dass** das mindestens eine Kniegelenk (217) einstückig ausgeformt ist.

8. Kalibriergewichtsanordnung nach einem der Ansprüche 1 bis 7 **dadurch gekennzeichnet, dass** der Antrieb ein Linearantrieb, beispielsweise ein Linearmotor, ein Spindelantrieb, ein Riemen-Antrieb oder ein magnetischer Antrieb ist.

9. Kalibriergewichtsanordnung nach einem der Ansprüche 1 bis 7 **dadurch gekennzeichnet, dass** der Antrieb einen mit einer Heizvorrichtung (19) zusammenwirkenden Aktuator (18) aus einer Formgedächtnislegierung aufweist.

10. Kalibriergewichtsanordnung nach Anspruch 9 **dadurch gekennzeichnet, dass** der Aktuator (18) aus einer Formgedächtnislegierung als Draht ausgestaltet ist.

11. Kalibriergewichtsanordnung nach Anspruch 1 bis 10 **dadurch gekennzeichnet, dass** der Antrieb (36) über mindestens eine Rolle oder mindestens einen Hebel (39) auf das Transfersystem einwirkt.

## Claims

1. Calibration weight arrangement for an electronic balance that has a force-transmitting device (1), wherein the calibration weight arrangement (2) comprises at least one calibration weight (14) with the capability of being coupled to the force-transmitting device (1), a transfer mechanism, and a drive source to effect a vertical displacement of the calibration weight, **characterized in that** the transfer mechanism comprises at least one resetting element (22, 37, 38, 40, 43, 48) and a lifting system comprising at least one knee joint linkage (17, 117, 217).

2. Calibration weight arrangement according to claim 1, **characterized in that** the resetting force of the resetting element (22, 37, 38, 40, 43, 48) is of a sufficient magnitude to counteract the weight force of the calibration weight (14) and the calibration weight holder (21) and to move the knee joint linkage (17, 117, 217) from a calibration position back to a rest position.

3. Calibration weight arrangement according to claim 1 or 2, **characterized in that** the calibration weight arrangement comprises a displacement stop (42, 53) for the knee joint linkage (17, 117, 217) in its rest position.

4. Calibration weight arrangement according to one of the claims 1 to 3, **characterized in that** the resetting element is a leg spring (38), a leaf spring (40), or a tension spring (43, 48).

5. Calibration weight arrangement according to one of the claims 1 to 2, **characterized in that** the resetting element is a compressive coil spring.

6. Calibration weight arrangement according to one of the claims 1 to 5, **characterized in that** the at least one knee joint (17, 117) comprises at least two formed parts (27, 28; 33, 133) which are connected to each other directly or through suitable connecting means (30, 31; 32, 132, 232).

7. Calibration weight arrangement according to one of the claims 1 to 5, **characterized in that** the at least one knee joint (217) is formed monolithically of one piece.

8. Calibration weight arrangement according to one of the claims 1 to 7, **characterized in that** the drive source is a linear drive, for example a linear motor, a spindle drive, a belt drive, or a magnetic drive.

9. Calibration weight arrangement according to one of the claims 1 to 7, **characterized in that** the drive source comprises an actuator (18) of a shape memory alloy working together with a heating device (19).

10. Calibration weight arrangement according to claim 9, **characterized in that** the actuator (18) of a shape memory alloy is configured as a wire.

11. Calibration weight arrangement according to claim 1 to 10, **characterized in that** the drive (36) acts on the transfer system by way of at least one roller or at least one lever (39).

## Revendications

1. Dispositif de poids d'étalonnage pour une balance électronique présentant un dispositif de transmission de force (1), le dispositif de poids d'étalonnage (2) comprenant au moins un poids d'étalonnage (14) pouvant être couplé au dispositif de transmission de force (1), un mécanisme de transfert et un entraînement pour le déplacement vertical du poids d'étalonnage, **caractérisé en ce que** le mécanisme de transfert présente au moins un élément de rappel (22, 37, 38, 40, 43, 48) et un système de levier comprenant au moins une articulation de genouillère (17, 117, 217).

2. Dispositif de poids d'étalonnage selon la revendication 1, **caractérisé en ce que** la force de rappel de l'élément de rappel (22, 37, 38, 40, 43, 48) est suffisante pour s'opposer à la force du poids d'étalonnage (14) et du support de poids d'étalonnage (21) et pour ramener l'articulation de genouillère (17, 117, 217) d'une position d'étalonnage à une position de repos.

3. Dispositif de poids d'étalonnage selon la revendication 1 ou 2, **caractérisé en ce que** le dispositif de poids d'étalonnage présente une butée (42, 53) pour l'articulation de genouillère (17, 117, 217) dans sa position de repos.

4. Dispositif de poids d'étalonnage selon l'une quelconque des revendications 1 à 3, **caractérisé en ce que** l'élément de rappel est un ressort à branche (38), un ressort à lames (40) ou un ressort de traction (43, 48).

5. Dispositif de poids d'étalonnage selon l'une quelconque des revendications 1 à 2, **caractérisé en ce que** l'élément de rappel est un ressort hélicoïdal de compression (22, 37).

6. Dispositif de poids d'étalonnage selon l'une quelconque des revendications 1 à 5, **caractérisé en ce que** la au moins une articulation de genouillère (17, 117) comprend au moins deux parties moulées (27, 28 ; 33, 133), qui sont reliées entre elles directement ou par des moyens de liaison (30, 31 ; 32, 132, 232) appropriés.

7. Dispositif de poids d'étalonnage selon l'une quelconque des revendications 1 à 5, **caractérisé en ce que** la au moins une articulation de genouillère (217) est formée d'une seule pièce.

8. Dispositif de poids d'étalonnage selon l'une quelconque des revendications 1 à 7, **caractérisé en ce que** l'entraînement est un entraînement linéaire, par exemple un moteur linéaire, une commande des broches, un entraînement par courroie ou un entraînement magnétique.

9. Dispositif de poids d'étalonnage selon l'une quelconque des revendications 1 à 7, **caractérisé en ce que** l'entraînement présente un actionneur (18) coopérant avec un dispositif de chauffage (19) à base d'un alliage à mémoire de forme.

10. Dispositif de poids d'étalonnage selon la revendication 9, **caractérisé en ce que** l'actionneur (18) est conçu à base d'alliage à mémoire de forme comme fil.

11. Dispositif de poids d'étalonnage selon la revendication 1 à 10, **caractérisé en ce que** l'entraînement (36) agit par au moins un galet ou au moins un levier (39) sur le système de transfert.
